# EUROPEAN PATENT APPLICATION

(11) **EP 4 001 479 A1**
(43) Date of publication of application: **25.05.2022**
(21) Application number: 21206782.1
(22) Date of filing: 05.11.2021
(51) Int. Cl.: D02G 3/32, D02G 3/44, D01D 5/42, D02G 3/06, D02J 1/22

(54) **FILAMENT MADE FROM CUTTING MEMBRANE MATERIAL AND BEING THINNED TO IMPROVE PHYSICAL PROPERTIES AND MANUFACTURING METHOD THEREOF**

(30) Priority: 24.11.2020 TW 109141189
(71) Applicant: Chance Line Industrial Co., Ltd., Changhua County (TW)
(72) Inventor: YAO, MING-HSIEN, Changhua County (TW); SHIH, PO-JEN, Changhua County (TW)
(74) Representative: Lang, Christian

(57) **Abstract**

The invention provides a filament (10), which is a fine filament cut and formed from a thermoplastic membrane material, and is made by thermal stretching and thermal shaping. Through the invention, the filament formed by cutting can have excellent physical properties including: high strength, high elastic recovery rate, low stretch elasticity, low elongation rate, improved environmental tolerance, and increased service life, so that the filament formed by cutting has a wider application range and can be directly used in textiles. The invention is capable of producing filaments thinner than those obtained by cutting method alone. In addition, when a surface of the filament is coated with a functional coating layer (16), the filament of the invention will not loose the function of the coating layer.

## Description

### BACKGROUND OF THE INVENTION

### Field of Invention

The invention is related to filament and thread in the textile field, and more particularly to a filament produced by cutting and a thinning method.

### Related Art

In order to improve the technology of the textile industry, the applicant has developed a number of technologies related to filament, such as the patent application No. EP20181256.7 "Cutting Method for Elastic Membrane Material and Elastic Filament".

The prior art cannot produce elastic fine filaments by cutting methods. The technology disclosed in the above-mentioned application is capable of producing the elastic filament with a small diameter by the cutting method to improve the drawbacks of the prior art being incapable of producing elastic fine filaments by cutting. However, after testing by the inventor, it was found that the elastic filament produced by cutting using the technology disclosed in the above patent application still has some imperfections that need to be improved.

The aforementioned elastic filament is formed by cutting an elastic membrane material, the membrane material must be made first, and then the elastic filament is cut from the membrane material. Due to the low modulus of the membrane material and the disorderly arrangement of molecular chains, the filament produced by cutting also has low modulus and disorderly arrangement of molecular chains, which can be easily decomposed resulting in fracture due to external environmental factors, such as exposure to air, moisture, high temperature, and irradiation of ultraviolet ray, and the service life is not long.

Furthermore, due to low modulus and disorderly arrangement of molecular chains, breaking elongation/elongation at break of the elastic filament produced by cutting is too large, for example, it can be stretched by 300% to 400% long, and cannot return to its original length after being stretched, which is not suitable for using in clothing textiles.

In order to reduce the breaking elongation of the elastic filament produced by cutting, one solution is to wrap the filament with several yarns to form a composite yarn. However, although the method of wrapping with the yarns can restrict a low-stress elastic stretchability effect of the filament by the yarns, a diameter of the finished product is too thick, no longer a fine filament, and the tactile impression will be affected after wrapping with the yarns, which is not suitable for using in knitting clothes. In addition, the yarns of the composite yarn are incapable of preventing the filament from degrading/fragmenting.

Furthermore, if the filament is equipped with micro glass beads to have a light-reflective effect, or when the filament is made to have a luminescent function, an outer circumference of the light-reflective or luminescent filament being wrapped with the yarns will greatly hinder the light-reflective brightness or luminescent brightness of the filament, the filament may even lose its light-reflective and luminescent effects, affecting the functions of the filament.

The inventor has developed the invention in order to improve the drawbacks of the filament produced by cutting.

### SUMMARY OF THE INVENTION

A main object of the invention is to provide a filament produced by cutting that has excellent physical properties for using in textiles.

Another object of the invention is to provide a filament produced by cutting, the filament has at least one functional coating layer, and the invention enables the filament produced by cutting and with the functional coating layer to have excellent mechanical properties.

Yet another object of the invention is to provide a method for manufacturing a filament produced by cutting and being thinned so that the filament produced by cutting has better physical properties and is suitable for using in textiles. And if the filament has a functional coating layer, the manufacturing method of the invention still retains the functions provided by the coating layer of the filament.

A filament provided by the invention is a fine/micro filament formed by cutting a membrane material, and is thermally stretched and shaped;
a cross-section of the filament is elliptical, and a cross-sectional structure thereof has:
a base layer with an elliptical cross-section, and a pair of surfaces of opposite sides of the base layer form two stretched surfaces; and
at least one coating layer provided on at least one of the stretched surfaces of the base layer by coating or plating, and adhered to the surface of the base layer by an adhesive material with a thermoplastic elastomer.

The filament of the invention made by thermal stretching and shaping has excellent physical properties including: high strength, high elastic recovery rate, low breaking elongation, high modulus, and being less likely to be deformed under low stress conditions. The filament has high tolerance to unfavorable factors in the environment, is not easy to decompose by water, light and air, is not easy subject to thermal degradation, oxidative degradation, has a long service life, and can be directly used in textiles. The adhesive layer can be stretched with the filament to ensure that the coating layer adheres on the base layer.

After being stretched and thinned, the filament forms a great number of polymer chain crystallization regions and more forward polymer chains, and has a higher modulus, is not easy to deform, has excellent physical properties, and can be directly used in textiles. And the filament can be used directly without being wrapped with the yarns. Therefore, the function of the coating layer will not be impaired or hindered. For example, the coating layer provides light-reflective or luminescent function, or the function of metallic color, or the function of conducting electricity.

After being stretched and thinned, the functional coating layer has a larger specific surface area on the surface of the filament, and an area ratio of the coating layer on the surface of the filament is increased.

Preferably, the adhesive material is mixed in the coating layer; or the filament further comprises: at least one adhesive layer made of a thermoplastic elastomer material with stretchability; and the at least one coating layer is adhered to at least one of the stretched surfaces of the base layer via the at least one adhesive layer.

Preferably, the base layer is made of a thermoplastic elastomer material to make the filament elastic. When the filament is stretched by 10%, its elastic recovery rate is at least 96%. A breaking elongation of the filament is within 100%, that is, the filament fractures/breaks after being stretched twice a length. For example, when the 10 cm long elastic filament is stretched to 20 cm (elongation by 10 cm), the filament fractures.

Preferably, the base layer is a membrane material with low elasticity and low stretchability.

The coating layer is a functional coating layer, which is a light-reflective layer with tiny light-reflective elements (such as glass microbeads), or a luminescent layer with luminescent particles, or a coating layer with a metallic color, or a coating layer with electric conductivity.

The invention provides a method for manufacturing filaments, the filament is cut and made from a membrane material and stretched and thinned. The manufacturing method comprising steps of:
A. preparing a membrane material, the membrane material having a membranous base layer and at least one membranous coating layer, the membranous base layer being made of a thermoplastic plastic material; the at least one membranous coating layer being adhered to at least one surface of the membranous base layer by an adhesive material with a thermoplastic elastomer;
B. cutting the membrane material into several fine filaments, each of the filaments having a rectangular cross-section;
C. applying thermal stretching to the filament, so that the filament being stretched and thinned by heating;
D. applying thermal shaping to the stretched filament to improve a thermal stability of the filament so that no excessive shrink in the filament after being heated; and
E. cooling the filament to make into a finished product;
   a cross-section of the stretched and thinned filament being elliptical.

Thereby, the filament can be made with the physical properties and use efficacies. And by stretching, it can break through a cutting limit of cutting equipment, and produce the filament with a smaller diameter, providing a better tactile impression and a wider application range.

The at least one membranous coating layer is located at least on a top or a bottom surface of the stretched filament, and after stretching, the coating layer stretches to a larger specific surface area.

Preferably, the adhesive material is mixed in the membranous coating layer; or the membrane material further comprises: at least one adhesive layer made of a thermoplastic elastomer material; and the at least one membranous coating layer is adhered to the base layer via the at least one adhesive layer.

The manufacturing method continuously draws the filament with rollers for thermal stretching, thermal shaping and cooling procedures.

A degree of thinning of the filament after stretching is between 50% and 150%.

A great number of polymer chain crystallization regions and more forward polymer chains are inside the base layer of the filament after stretching and thinning.

### BRIEF DESCRIPTION OF THE DRAWINGS

The objects, features, and achieved efficacies of the invention can be understood from the description and drawings of the following preferred embodiments, in which:
FIG. 1 is a perspective schematic view of a filament according to a first preferred embodiment of the invention, the filament is produced by cutting and is not thinned.
FIG. 2 is a perspective schematic view of a thermoplastic membrane material used to make the filament of FIG. 1, and several cutters are shown.
FIG. 3 is a perspective schematic view of the filament according to a second preferred embodiment of the invention, the filament is produced by cutting and is not thinned.
FIG. 4 is a perspective schematic view of the thermoplastic membrane material used to make the filament of FIG. 3, and several cutters are shown.
FIG. 5 is a cross-sectional schematic view of the filament of the preferred embodiments of FIG. 1 and FIG. 3.
FIG. 6 is a schematic diagram of a cutting manufacturing method of the filament of FIG. 1 and FIG. 3.
FIG. 7 is a stress-strain graph of the filament produced by cutting in FIG. 1.
FIG. 8 is a schematic diagram of a manufacturing process of the thinned filament according to a preferred embodiment of the invention.
FIG. 9 is a transverse cross-sectional schematic view of the filament of FIG. 1 and FIG. 3 after being thinned by the manufacturing process of FIG. 8.
FIG. 10 is a longitudinal cross-sectional schematic view of a base layer of the thinned filament of FIG. 9.
FIG. 11 is a stress-strain graph of the stretched elastic filament of FIG. 9.
FIG. 12 is a cross-sectional view of another cut and unstretched filament.
FIG. 13 is a cross-sectional schematic view of the filament of FIG. 12 after being stretched and thinned.
FIG. 14 is a perspective schematic view of the filament according to a third preferred embodiment of the invention, the filament is produced by cutting and is not thinned.
FIG. 15 is a perspective schematic view of the thermoplastic membrane material used to make the filament of FIG. 14.
FIG. 16 is a transverse cross-sectional schematic view of the filament of FIG. 14 after being thinned by the manufacturing process of FIG. 8.
FIG. 17 is a photomicrograph of the unstretched filament.
FIG. 18 is photomicrographs of the unstretched filament and the stretched filament.
FIG. 19 is microstructure photographs of the unstretched filament and the stretched filament.

### DETAILED DESCRIPTION OF THE INVENTION

The invention aims to provide a filament produced by cutting. In the invention, the filament is cut and made from a membrane material, and the filament produced by cutting is thinned (in diameter) to improve the physical properties and environmental tolerance of the filament produced by cutting, so that the filament produced by cutting can be used in textiles.

In the invention, the filament produced by cutting is thinned (in diameter) into a filament capable of being used in the textile field. In this specification, the cut but unthinned filament is collectively referred with the reference number 10, wherein the reference number 10A refers to the elastic filament; the reference number 10B refers to the filament with low stretch elasticity and low ductility; and the reference number 10C refers to the unthinned filament. In the invention, the thinned filament is collectively referred with the reference number 20, which is the thinned product of the unthinned filament 10 mentioned above, wherein the reference number 20A refers to the thinned elastic filament; the reference number 20B refers to the thinned filament with low stretch elasticity and low ductility; and the reference number 20C refers to the thinned filament. In the invention, a base layer of the unthinned filament 10 is collectively referred with the reference number 12, wherein the reference number 12A refers to the unthinned and elastic base layer; and the reference number 12B refers to the unthinned base layer with low stretch elasticity and low ductility. In the invention, the base layer of the thinned filament 20 is collectively referred with the reference number 22, wherein the reference number 22A refers to the thinned and elastic base layer; the reference number 22B refers to the thinned base layer with low stretch elasticity and low ductility; and the reference number 22C refers to the elastic base layer or the base layer with low stretchability. In this specification, the membrane material used to cut into the filament 10 is collectively referred with the reference number 30, wherein the reference number 30A refers to the elastic membrane material; the reference number 30B refers to the membrane material with low elasticity and low ductility; and the reference number 30C refers to the elastic membrane material or the membrane material with low stretchability.

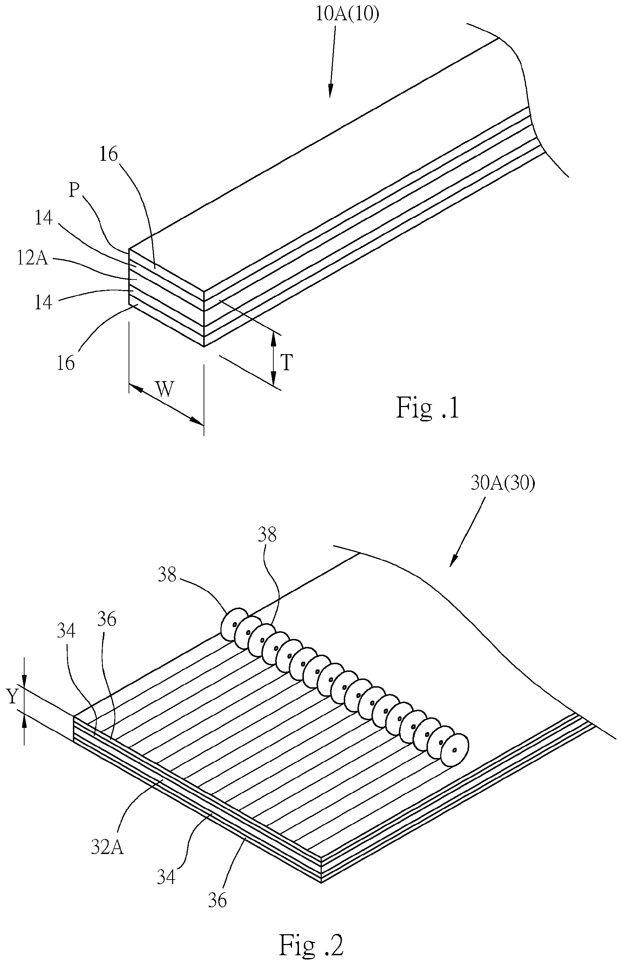

FIG. 1 is a filament 10 (10A) produced by cutting according to a first preferred embodiment of the invention. The filament 10 (10A) has a considerable length and can be as long as three thousand meters to four thousand meters. The filament 10A of FIG. 1 is elastic and has a multi-layer structure in cross-section, and has a base layer 12A, at least one adhesive layer 14 and at least one functional coating layer 16. One pair of surfaces of opposite sides of the base layer 12A, such as a top surface and a bottom surface, are defined as disposing surfaces of the base layer 12A. An area of the two disposing surfaces is larger than an area of another pair of surfaces (i.e., left and right surfaces) of opposite sides of the base layer 12A. The at least one functional coating layer 16 is adhered to at least one of the disposing surfaces of the base layer 12A via the at least one adhesive layer 14. The filament 10A of the preferred embodiment of the invention has the two functional coating layers 16 respectively adhered to the disposing surfaces of the top and bottom sides of the base layer 12A via the two adhesive layers 14. The other pair of the surfaces (i.e., left and right surfaces) of the opposite sides of the base layer 12A are surfaces formed by cutting.

The base layer 12A is made of a thermoplastic elastomer material, such as an elastic material of thermoplastic polyolefin (TPO), specifically, such as, but not limited to, TPU (thermoplastic polyurethanes), TPE (thermoplastic elastomer), TPEO (thermoplastic polyolefin elastomer), TPEU (thermoplastic polyether-based urethane elastomer), or TPU based hot melt adhesive elastomer. The base layer 12A is the basis of the stretch elasticity of the filament 10A, making the filament 10A an elastic filament.

Each of the adhesive layers 14 is an adhesive made of a thermoplastic elastomer material with elasticity and stretchability, such as, but not limited to, a hot melt adhesive of TPU.

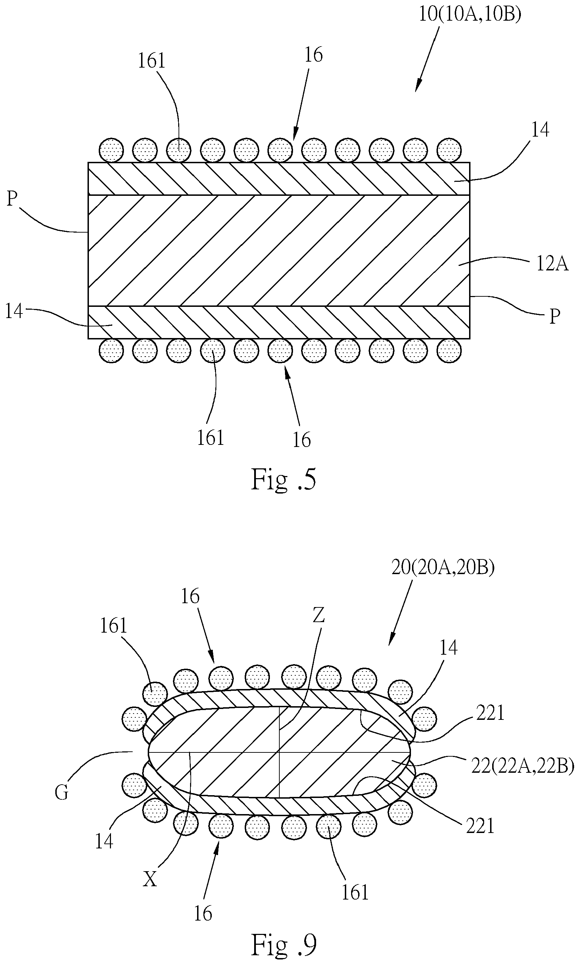

Each of the functional coating layers 16 is a coating layer formed by coating and has a specific function. The functional coating layer 16 can be organic or inorganic, such as a luminescent layer, a light-reflective layer, a coating layer with a metallic color, or an electric conductive layer. The luminescent layer is a coating layer containing luminescent particles, for example, a coating layer formed by mixing luminescent particles with a mixed liquid of a polymer resin to provide a luminescent effect. The resin can be a polyurethane (PU) resin. The light-reflective layer is a coating layer formed by tiny light-reflective elements (such as glass microbeads), which is coated on the disposing surfaces of the base layer 12A to provide a light-reflective effect. The coating layer with the metallic color can be a mixture of aluminum powder and polyurethane (PU), which is disposed on the disposing surfaces of the top and bottom sides of the base layer 12A by electroplating or coating, so that the surfaces of the filament 10A has a bright effect of metal surfaces, the polyurethane is a substrate of the coating layer 16, and the aluminum powder is mixed in the substrate. According to a color of aluminum powder, the coating layer with the metallic color can be made into various colors such as gold, silver, red, blue, green, and orange. The coating layer with electric conductivity can be a conductive slurry coating layer, which is disposed on the disposing surfaces of the top and bottom sides of the base layer 12A by coating or electroplating, and is adhered onto the base layer 12A via the adhesive layers 14. As shown in FIG. 5, the functional coating layer 16 of this embodiment is embodied as a light-reflective layer formed by glass microbeads 161 as an example. The two functional coating layers 16 can be coating layers with a same function, for example, both are luminescent layers or both are light-reflective layers; the two functional coating layers 16 can also be coating layers with different functions, for example, one of the functional coating layers 16 is a luminescent layer and the other functional coating layer 16 is a light-reflective layer.

The elastic filament 10A of FIG. 1 is produced by cutting the elastic membrane material 30A shown in FIG. 2. The membrane material 30A is a thin film made of a thermoplastic elastomer (hereinafter referred to as thermoplastic elastic membrane material or elastic membrane material for short), and has an elastic membranous base layer 32A and at least one adhesive layer 34 and at least one membranous coating layer 36 provided on at least one disposing surface of the membranous base layer 32A, and the membranous coating layer 36 is a membranous functional layer. The thermoplastic elastic membrane material 30A has the two membranous functional layers 36, which are adhered on disposing surfaces of top and bottom sides of the membranous base layer 32A via the two adhesive layers 34. A material of the membranous base layer 32A is the same as the material of the base layer 12A of the filament 10A, and is a thermoplastic elastomer material. A material of each of the adhesive layers 34 is the same as that of the adhesive layer 14 and is an adhesive made of a thermoplastic elastomer material. A material or composition of each of the membranous functional layers 36 is the same as that of the functional coating layer 16, and can be a light-reflective coating layer, a luminescent coating layer, a coating layer with a metallic color, or a coating layer with electric conductivity.

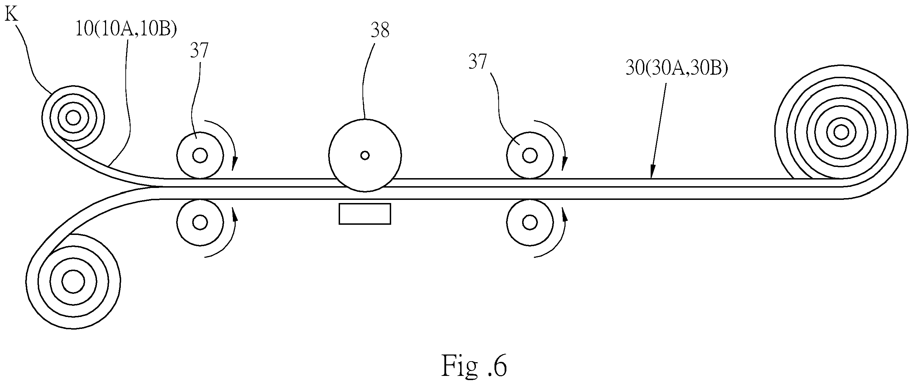

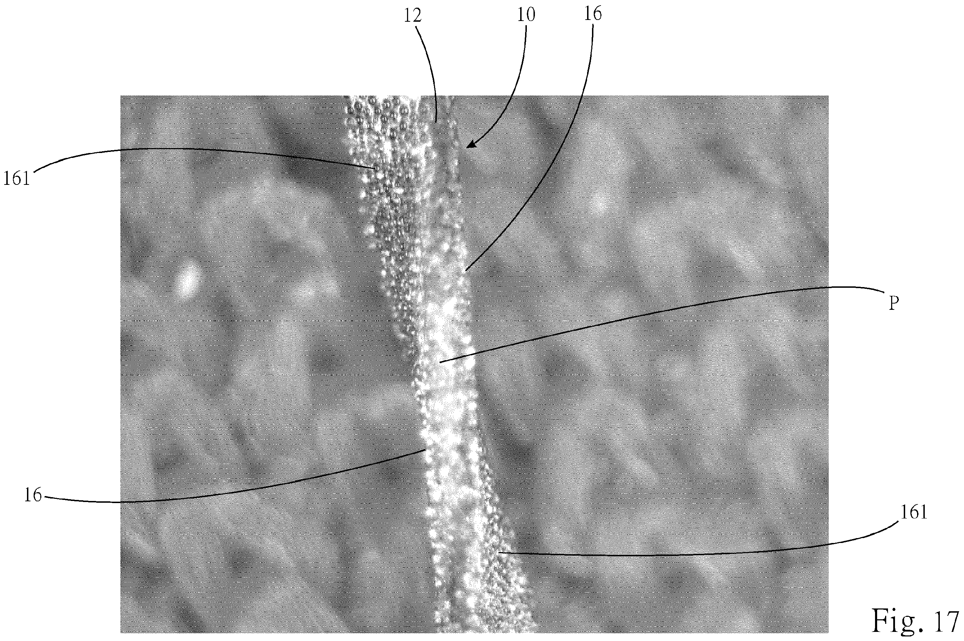

The elastic membrane material 30A is cut and made into the elastic filaments 10A by a cutting method shown in FIG. 6. The elastic membrane material 30A is conveyed via rollers 37, and cut by at least one row of cutters 38 to form the elastic filaments 10A. As shown in FIGS. 1 and 5, since the elastic filament 10A is formed by cutting, its cross-section is rectangular, its two sides are cut planes P, and its top and bottom surfaces are the top and bottom surfaces of the elastic membrane material 30A. The two functional coating layers 16 of the elastic filament 10A shown in FIG. 5 are both light-reflective layers and have the glass microbeads 161; FIG. 17 shows a photomicrograph of the elastic filament 10A. In this preferred embodiment, a thickness Y of the elastic membrane material 30A is 0.22 mm, and a distance between the two adjacent cutters 38 (a distance between cutting edges of the cutters 38) is 0.25 mm. Therefore, a width W of the elastic filament 10A produced by cutting is 0.25 mm, and a thickness T of the elastic filament 10A produced by cutting is 0.22 mm. Being limited by the physical limitations of cutting machine, the distance between two adjacent cutters 38 must be greater than the thickness Y of the elastic membrane material 30A before cutting can be performed; if the distance between two adjacent cutters 38 is less than the thickness Y of the elastic membrane material 30A, the elastic membrane material 30A will be squeezed between the cutters 38, due to considerable pressure and friction being generated between the elastic membrane material 30A and the cutters 38, the elastic membrane material 30A will get stuck between the cutters 38, and even the cutters 38 may break and make it impossible to cut. Therefore, a diameter of the elastic filament 10A produced by cutting is physically limited.

The elastic filament 10A is cut and made from the elastic membrane material 30A. The elastic membrane material 30A is formed by shaping a liquid mixture, molecular chains inside the elastic membrane material 30A are disordered, its tolerance to the environment is low, and is incapable of resisting influence by environmental factors of ultraviolet ray, oxygen, moisture and humidity. The elastic filament 10A is irradiated by ultraviolet ray, and in the atmosphere, in water, or in a high-humidity environment, its molecular chains are easy to decompose, fracture and degrade, resulting in short service life.

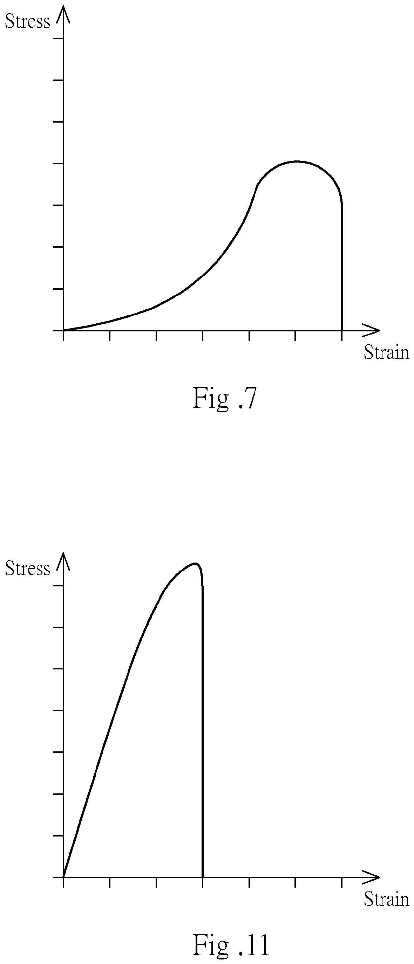

Because the molecular chains of the elastic filament 10A are disordered and arranged irregularly, and there is almost no polymer chain crystallization region, its initial modulus is low, and breaking elongation/elongation at break is high, which can reach 250%~300%, that is, the 10 cm long elastic filament 10A is stretched to 35 cm (250% elongation rate) or 40 cm (300% elongation rate) before it fractures/breaks. FIG. 7 shows a stress-strain graph of the elastic filament 10, which is easily deformed by force due to its low initial modulus.

Due to the disordered molecular chains of the elastic filament 10A, its elastic recovery rate is very poor. For example, when the 10 cm long elastic filament 10A is stretched to 11 cm (10% elongation rate), after the tension is released, the elastic filament 10A is only slightly retracted to 10.8 cm, unable to restore to the original length of 10 cm. Since the original length cannot be restored after stretching, the elastic filament 10A is draped and cannot be used in textiles.

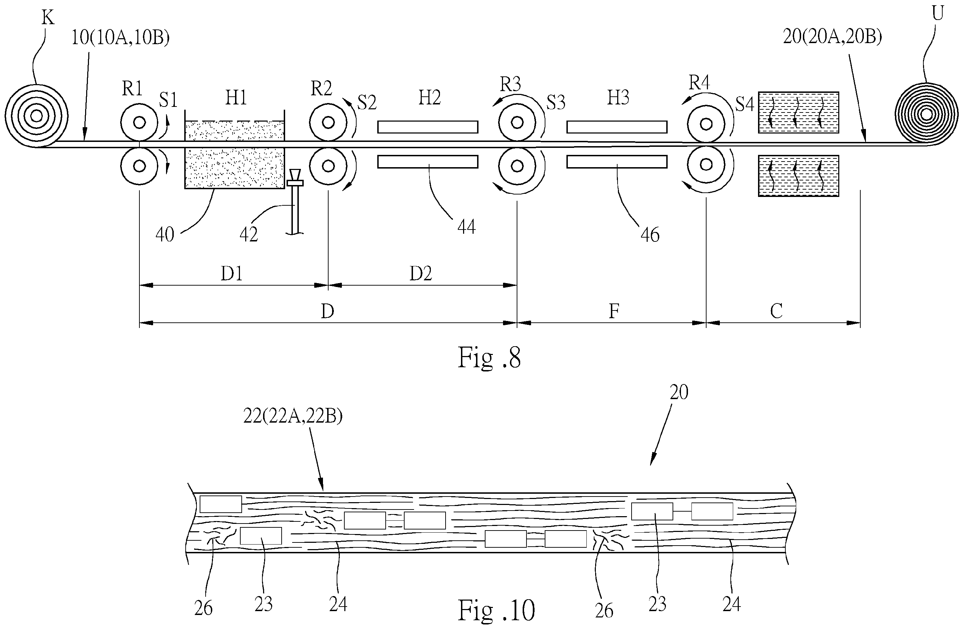

Please refer to FIG. 8, in the invention, a thermal drafting (thermal stretching) process is further applied to the elastic filament 10A to enhance its mechanical properties and physical properties. At a temperature below a melting point of the elastic filament 10A, such as a temperature of 60°C to 120°C, the elastic filament 10A with the base layer 12A in a rubbery state is drafted (drawn and stretched) to make the elastic filament 10A thin (in diameter) and reorganize the molecular chains and internal structure of the base layer 12A, for example, but not limited to, the elastic filament 10 is thinned from 750 deniers to 500-300 deniers, and a degree of thinning is between 50% and 150%. After thermal drafting (thermal stretching), the thinned elastic filament 20A is obtained as a finished product with excellent properties and physical properties and can be used in the textile technics. Hereinafter, a manufacturing method for the thermal-drafted and thinned elastic filament 10A of the preferred embodiment of the invention will be described in detail.

After the elastic filament 10A is cut and made by a cutting operation of FIG. 6, the elastic filament 10A can be wound into a roll K, and then the thermal drafting (thermal stretching) process of FIG. 8 can be performed; or, after the elastic filament 10A is cut, the elastic filament 10A is not wound, proceed directly to the thermal drafting (thermal stretching) operation of FIG. 8.

The invention applies a thermal drafting (thermal stretching) D procedure and a thermal shaping F procedure to the elastic filament 10A produced by cutting at a temperature above 60°C and below the melting point of the elastic filament 10A, and then the stretched and thinned elastic filament 10A is applied with a cooling C procedure to obtain the thinned elastic filament 20. In the embodiment of FIG. 8, several sets of rollers R1, R2, R3, and R4 are used to draw and stretch the elastic filament 10A, and the elastic filament 10A is stretched and shaped by the rollers R1, R2, R3, and R4 with different rotation speeds. Hereinafter, the thermal drafting process of the invention will be explained.

In the invention, the elastic filament 10A is first applied with the thermal drafting (thermal stretching) D (hereinafter referred to as drafting or stretching), and the thermally stretched elastic filament 10A is applied with the thermal shaping F, and then the elastic filament 10A is applied with the cooling C to make its structure stable, and the thinned elastic filament 20A can be obtained as a final product. The thermal stretching D can be completed in one stretching procedure or more than one stretching procedure. In this embodiment, the elastic filament 10A is stretched in two stretching D1, D2 procedures. The first set of the rollers R1 convey the elastic filament 10A at a first rotation speed S1, and the second set of the rollers R2 draw the elastic filament 10A at a second rotation speed S2; then, the third set of the rollers R3 draw the elastic filament 10A at a third rotation speed S3, the elastic filament 10A is stretched between the first set of the rollers R1 and the third set of the rollers R3, and after the thermal stretching D procedure, the thermal shaping F procedure is applied to the elastic filament 10A between the third set of the rollers R3 and the fourth set of the rollers R4, and the elastic filament 10A is slightly shrunk. Afterwards, the elastic filament 20A of the invention is made by the cooling C procedure.

The above-mentioned manufacturing process is described below. Wherein the rotation speeds S1-S4 of the rollers R1, R2, R3, and R4 are examples rather than limitations. The first set of the rollers R1 convey the elastic filament 10A at the rotation speed S1 of 10m/min (10 meters per minute), and the second set of the rollers R2 draw the elastic filament 10A at the rotation speed S2 of 40m/min (40 meters per minute). The first stretching D1 is applied to the elastic filament 10A between the second set of the rollers R2 and the first set of the rollers R1, and the elastic filament 10A is stretched by 300% (that is, stretched by 300% in length); the third set of the rollers R3 draw the elastic filament 10A at the rotation speed S3 of 48m/min, and the second stretching D2 is applied to the elastic filament 10A between the third set of the rollers R3 and the second set of the rollers R2 to further stretch the elastic filament 10A by 20%. The thermal stretching D procedure of the invention elongates a length of the elastic filament 10A by 200% to 450%.

In this embodiment, the elastic filament 10A is stretched by the two stretching D1, D2 procedures, so that the stretch of the elastic filament 10A is more stable. The first stretching D1 stretches the elastic filament 10A at a larger stretch ratio, and after the first stretching D1, the second stretching D2 stretches the elastic filament 10A at a smaller stretch ratio. Through the two stretches D1, D2, the elastic filament 10A is thinned, a diameter thereof becomes smaller, and the denier is reduced, the base layer 12A is also thinned, and after the stretching D, the polymer chains of the base layer 12A of the elastic filament 10A are arranged in the forward/straight forward direction (along a longitudinal direction of the elastic filament 10A, i.e. the stretched direction). The thermal drafting D procedure reduces the denier of the elastic filament 10A by at least half, for example, the elastic filament 10A is stretched by 300% or 400% (for example, the 10 cm long elastic filament 10A is stretched to 40 cm or 50 cm in length), the elastic filament 10A is reduced from, for example, 800 deniers to, for example, 300 deniers or less than 300 deniers, and the denier is 0.375 times before stretching. Take the elastic filament 10A in FIG. 1 as an example, a cross-sectional area of the elastic filament 10A before stretching is 0.055 mm² (width W: 0.25 mm x thickness T: 0.22 mm), after the thermal drafting D, as shown in FIG. 9, a cross-sectional area of the elastic filament 20A becomes 0.0275 mm², a diameter thereof becomes smaller, and the denier is greatly reduced.

During the stretching D procedure, a heater uses gas or liquid as a medium to provide heat energy to the elastic filament 10A, so that the molecular chains of each part of the elastic filament 10A are stretched in an active state. After being stretched and thinned, as shown in FIG. 10, the base layer 22A of the elastic filament 20 obtains a great number of polymer chain crystallization regions 23 and polymer chains 24 arranged in the forward direction, leaving only a small amount of irregularly arranged polymer chains 26. The physical properties of the elastic filament 20 are improved, and the forward polymer chains 24 are arranged along a longitudinal direction of the elastic filament 20. In this embodiment, in the first stretching D1, a fluid tank 40 is used to hold a liquid, and the elastic filament 10 is heated with the liquid (such as hot water) at a temperature H1 of 60°C to 100°C, and in the second stretching D2, an electric heater 44 is used to provide hot air with a temperature of H2 of 100°C to 120° C to heat the elastic filament 10. The heat exchange rate of hot water is fast, so during the first stretching D, the elastic filament 10 can be quickly and evenly heated to a temperature of the thermal stretching, and during the second stretching D2, the electric heater 44 provides the higher temperature H2 to heat the elastic filament 10 continuously.

Since hot water is used to heat the elastic filament 10 in the first stretching D1 in this embodiment, an exhaust device 42 or a blowing device can be disposed between the fluid tank 40 and the second set of the rollers R2, so that after the elastic filament 10 has left the fluid tank 40, water vapor of the elastic filament 10 is sucked away or blown away to remove dangerous factors.

After the elastic filament 10A is stretched, its internal stress is eliminated. Then, the thermal shaping F procedure is performed between the third set of the rollers R3 and the fourth set of the rollers R4, so that the base layer 22A of the elastic filament 10A is shaped in a stretched state, and an internal structure of the base layer 22A maintains the polymer chain crystallization regions 23 and the polymer chains 24 arranged in the forward direction. In the thermal shaping F procedure, a heating device, such as an electric heater 46, provides a temperature H3 to heat the elastic filament 10A to make the elastic filament 10A memorize and shape the state and internal structure after the thermal drafting at the temperature H3. The temperature H3 of the thermal shaping F is greater than the temperature of the thermal stretching D procedure, but does not exceed the melting point of the elastic filament 10A, such as 80°C~140°C, preferably 100°C~140°C. The fourth rotation speed S4 of the fourth set of the rollers R4 does not exceed the third rotation speed S3 of the third set of the rollers R3, and is the same as or slightly smaller than the rotation speed S3, so the elastic filament 10A is not stretched in the thermal shaping F procedure. The fourth rotation speed S4 in this embodiment is 46m/min (46 meters per minute), which is slightly smaller than the third rotation speed S3. In this way, during the thermal shaping F stage, the elastic filament 10A will retract a little bit to make the produced elastic filament 20 more stable to heat during use. After the thermal shaping, a thermal stability of the elastic filament 10A is improved, so that the elastic filament 10A will not shrink too much after being heated, so as to stabilize a shrinkage ratio of the elastic filament 20 in subsequent processing (such as being used as a sewing thread, an embroidery thread).

Furthermore, in order to prevent the stretched elastic filament 10A from generating static electricity, an electrostatic elimination device can be disposed in the stretching D procedure (for example, between the second set of the rollers R2 and the third set of the rollers R3), or in the shaping F stage to eliminate the static electricity of the elastic filament 10A.

After the setting stage of the thermal shaping F, the cooling C procedure is applied to the elastic filament 10A to make the elastic filament 20A of the invention. Afterwards, the elastic filament 20A can be wound into a roll U for use. In this embodiment, the elastic filament 10A is cooled by air cooling, for example, the elastic filament 10A is cooled by a temperature (for example, 18°C to 28°C.) of an air-conditioning room. The rollers R1 to R4 continuously draw the elastic filament 10A to complete the processes of thermal stretching, thermal shaping, and cooling.

The elastic filament 10A of FIG. 1 is thermally drafted and thinned to form the elastic filament 20A shown in FIG. 9. In a cross-sectional structure, stretched surfaces 221 are formed on disposing surfaces of top and bottom sides of the base layer 22A of the elastic filament 20A after stretching, and the stretched surface 221 has a radian/curvature formed by stretching; the stretched surfaces 221 on the top and bottom sides of the base layer 22A have the two functional coating layers 16, as shown in FIG. 9, the coating layer 16 is a light-reflective layer with the glass microbeads 161, and the two light-reflective layers 16 are adhered to the base layer 22A via the two adhesive layers 14. After stretching and thinning, a diameter of the elastic filament 20 becomes smaller, the denier decreases, and a cross-section of the elastic filament 20 is elliptical, no longer rectangular, and a cross-section of the base layer 22A is also elliptical; the two functional coating layers 16 are stretched together with the base layer 22A, and are adhered to the base layer 22A along the radian/curvature of the stretched surfaces 221. The other pair of the opposite sides of the elastic filament 20A, that is, surfaces of two sides G formed by cutting are arcuate.

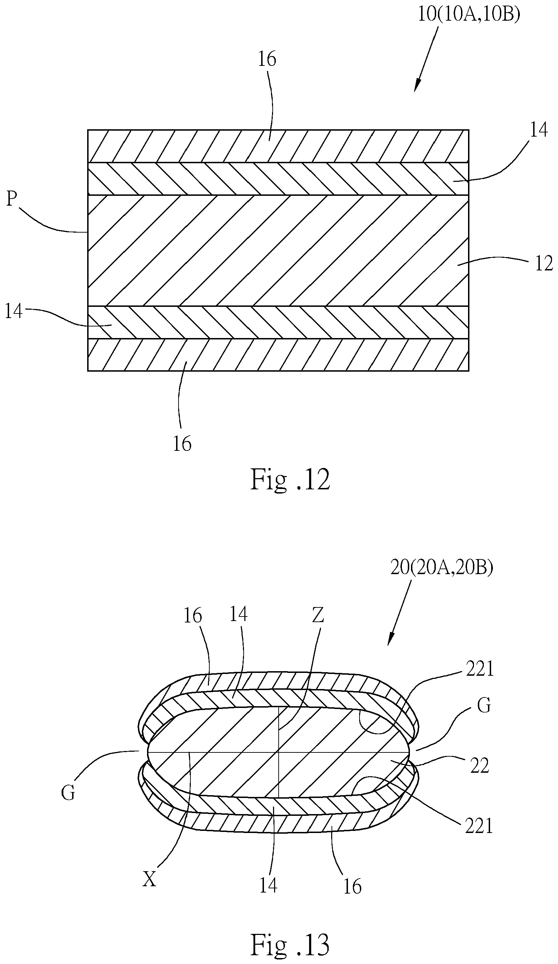

FIG. 12 and FIG. 13 respectively show cross-sectional views of another filament of the invention. Wherein the filament 10 of FIG. 12 is produced by cutting but is not stretched and thinned, and its cross-section is rectangular. The filament 20 of FIG. 13 is made from the filament 10 of FIG. 12 after the stretching D, the thermal shaping F, and the cooling C procedures, and a cross-sectional shape of the filament 20 is elliptical. FIGS. 12 and 13 show the non-light-reflective coating layers 16, such as membranous luminescent coating layers, or membranous metallic color coating layers, or membranous coating layers with electric conductivity, and luminescent particles or aluminum powder or conductive substances of conductive slurry are present in the coating layers 16.

As shown in FIGS. 9 and 13, after stretching and thinning, both the cross-sectional shape of the filament 20 and the cross-sectional shape of the base layer 22 are elliptical. The two functional coating layers 16 and the two adhesive layers 14 are stretched into a larger specific surface area. If the coating layer 16 is a luminescent or light-reflective coating layer, the luminescent or light-reflective area after stretching is wider.

The coating layers 16 and the adhesive layers 14 are stretched together with the base layer 22, the two coating layers 16 and the two adhesive layers 14 of the thinned filament 20 are arcuate, and the two coating layers 16 are adhered to the stretched surfaces 221 of the base layer 22 via the two adhesive layers 14, the coating layers 16 and the adhesive layers 14 are disposed on the base layer 22 along the radian/curvature of the stretched surfaces 221 of the base layer 22. The coating layers 16 also have radian/curvature. Since the two adhesive layers 14 are made of a thermoplastic elastomer material, when the filament 10 is stretched, the two adhesive layers 14 are capable of stretching with the base layer 22 without fracturing, ensuring the functional coating layers 16, especially the glass microbeads 161 can be maintained to adhere to the base layer 22 without falling off or separating.

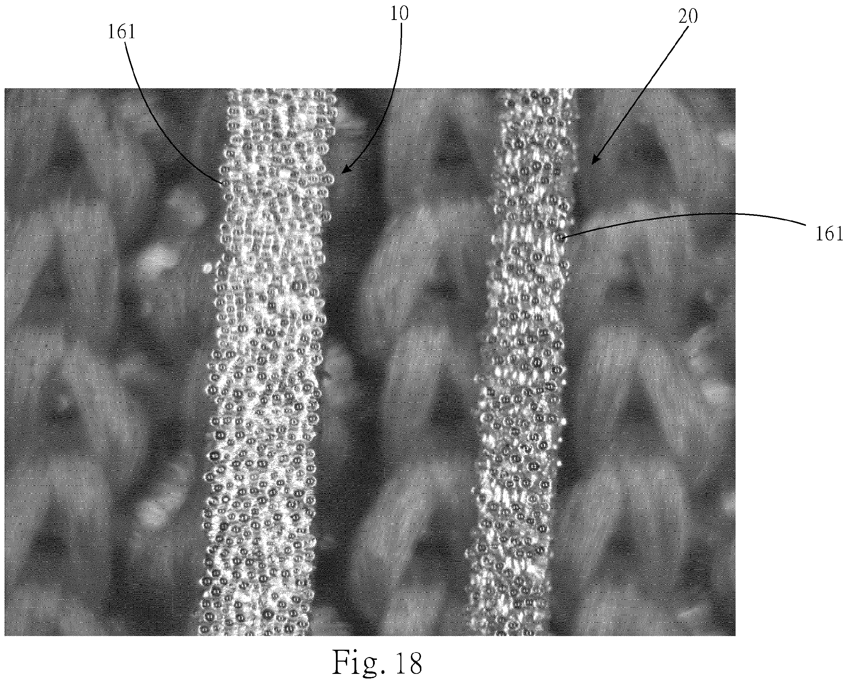

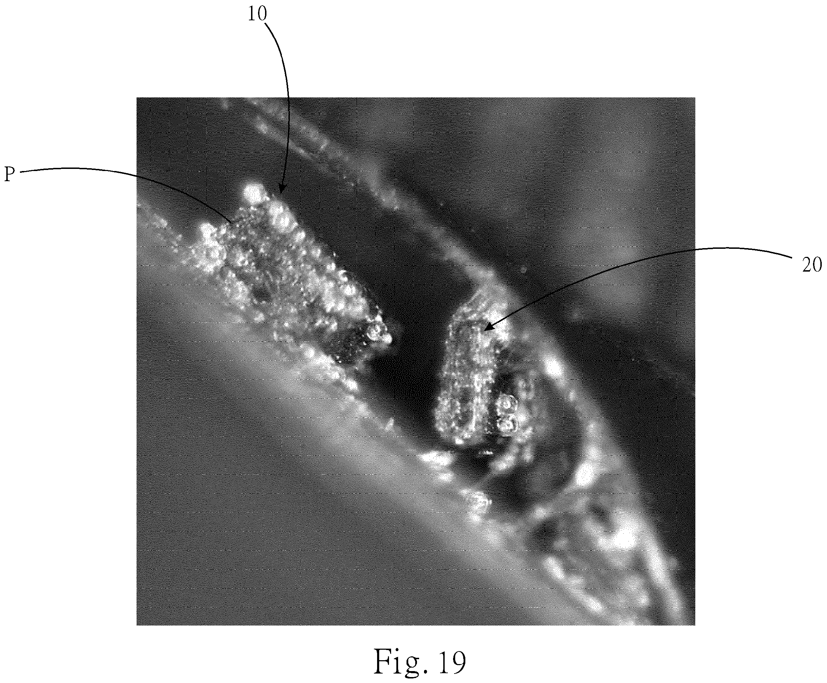

FIGS. 18 and 19 show photomicrographs of the elastic filament 10 before the thermal drafting (thermal stretching) and the elastic filament 20 after the thermal drafting (thermal stretching). FIG. 18 shoots the elastic filaments 10 and 20 from a top-view angle. In the thermally drafted and thinned elastic filament 20, its denier is reduced to less than half of that of the elastic filament 10 before the thermal drafting, and a diameter of the elastic filament 20 is smaller than that of the elastic filament 10.

FIG. 19 shows the microstructures of the elastic filament 10 and the elastic filament 20 in an end view, the cross-section of the elastic filament 10 is rectangular; and the cross-section of the stretched and thinned elastic filament 20 (including the base layer and the coating layers) is elliptical, and the two sides G of the elastic filament 20 are arcuate. As shown in FIGS. 9 and 13, the elliptical cross-section of the drafted filament 20 (20A, 20B) has two axial directions with different lengths. As shown in FIGS. 9 and 13, a horizontal axis X is in the lateral direction and a vertical axis Z is in the vertical direction, wherein a length of the horizontal axis X is greater than that of the vertical axis Z.

The internal structure of the base layer 22A of the stretched and thinned elastic filament 20A produced by the invention produces the polymer chain crystallization regions 23 and the forward polymer chains 24, leaving only a small amount of the irregular polymer chains 26. The invention eliminates the irregularly arranged molecular chains in the elastic filament 10A, converts the irregularly arranged molecular chains into the crystallization regions 23 and the forward polymer chains 24, and improves the physical properties of the elastic filament 20A, including increasing a strength and an initial modulus of the elastic filament 20, increasing an elastic recovery rate, reducing a breaking elongation, and improving a tolerance to the environment to be capable of withstanding irradiation of ultraviolet ray, and withstanding the influence of water vapor and air without degrading/decomposing, and has a long service life. The crystallization regions 23 and the forward polymer chains 24 are capable of increasing a tensile force that the elastic filament 20 can withstand, increasing its strength, and its strength can be increased by 1.3 to 2 times, making the elastic filament 20A stronger. FIG. 11 shows a stress-strain graph of the elastic filament 20A produced after the thermal stretching and the thermal shaping, its initial modulus is high, breaking elongation is low, and it is not easy to be deformed by force.

The forward polymer chains 24 are capable of strengthening an ability of elastic recovery of the elastic filament 20A. The elastic filament 20A made by the invention is applied with a 10% stretching test. For example, the 10 cm long elastic filament 20A is stretched to 11 cm, which can be almost 100% elastically recovered, that is, being restored to 10 cm. If stretched by 20%, that is, stretched from 10 cm to 12 cm, its elastic recovery rate is also as high as 97%, that is, a length of elastic recovery is 10.03 cm. Therefore, the elastic filament 20A has an elastic recovery rate of at least 96% when stretched by 10%, and an elastic recovery rate of at least 95% when stretched by 20%.

Because of elimination of the irregularly arranged molecular chains, an elasticity of the elastic filament 20A can be reduced. A breaking elongation of the elastic filament 10 before thinning is 300%, and a breaking elongation of the elastic filament 20 is reduced to 150% after thinning. The breaking elongation is limited to within two times (200%).

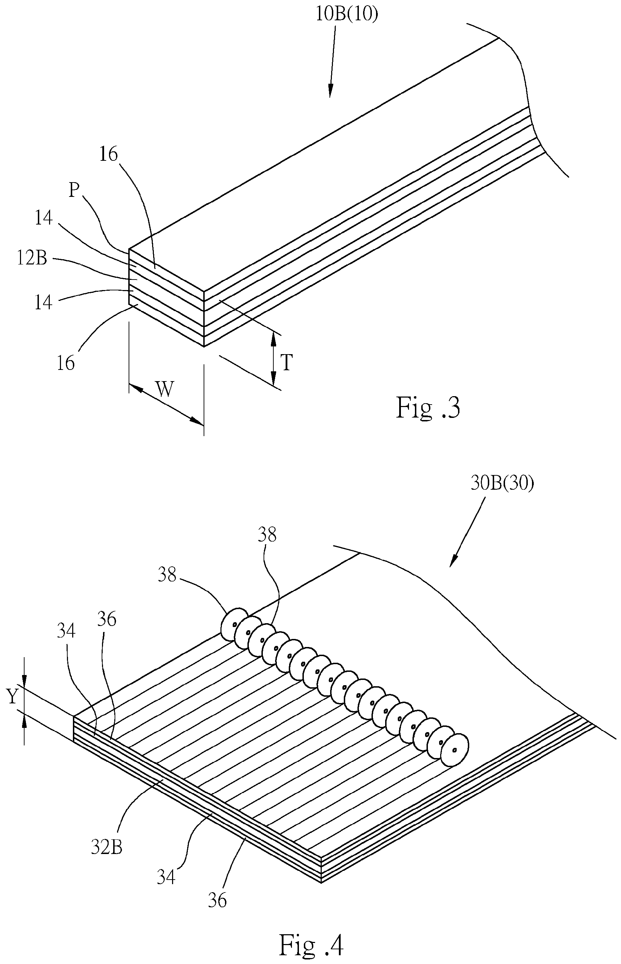

FIG. 3 is the filament 10B produced by cutting according to a second preferred embodiment of the invention. The filament 10B has low stretch elasticity and low stretchability. A cross-section of the filament 10B is a multilayer structure, and has a base layer 12B, at least one adhesive layer 14 and at least one functional coating layer 16. The filament 10B of this preferred embodiment has the two functional coating layers 16 respectively adhered to disposing surfaces of a top side and a bottom side of the base layer 12B via and two adhesive layers 14.

The base layer 12B is made of a thermoplastic material with low stretch elasticity and low stretchability, such as nylon, or polyester material, such as PET (polyethylene terephthalate). The base layer 12B is a main body of the filament 10B.

Each of the adhesive layers 14 is an adhesive made of a thermoplastic elastomer material with stretch elasticity, such as, but not limited to, a hot melt adhesive of TPU.

Each of the functional coating layers 16 is a coating layer formed by coating and has a specific function. The functional coating layer 16 can be a luminescent layer, a light-reflective layer, a coating layer with a metallic color, or an electric conductive layer. The functional coating layer 16 of this embodiment is the same as that of the first preferred embodiment, please refer to the description of the first embodiment for details.

The filament 10B of FIG. 3 is produced by cutting the thermoplastic membrane material 30B shown in FIG. 4. The membrane material 30B has low stretch elasticity and low stretchability, and has a membranous base layer 32B and the at least one adhesive layer 34 and the at least one membranous functional layer 36 provided on at least one disposing surface of the membranous base layer 32B. The thermoplastic membrane material 30B has the two membranous functional layers 36, which are adhered on disposing surfaces of top and bottom sides of the membranous base layer 32B via the two adhesive layers 34. A material of the membranous base layer 32B is the same as the material of the base layer 12B of the filament 10B. A material of each of the adhesive layers 34 is the same as that of the adhesive layer 14. A material or composition of each of the membranous functional layers 36 is the same as that of the functional coating layer 16, and can be a light-reflective coating layer, a luminescent coating layer, a coating layer with a metallic color, or a coating layer with electric conductivity.

The membrane material 30B is also cut and made into the filaments 10B by the cutting method of FIG. 6, a cross-section of the filament 10B produced by cutting is rectangular as shown in FIGS. 5 and 12, its two sides are the cut planes P, and its top and bottom surfaces are top and bottom surfaces of the membrane material 30B, and the photomicrographs of the filament 10B are also shown in FIGS. 17 to 19. The thickness Y of the membrane material 30B of this preferred embodiment is 0.22 mm, and a distance between the two adjacent cutters 38 (a distance between the cutting edges of the cutters 38) is 0.25 mm. Therefore, the width W of the filament 10B produced by cutting is 0.25 mm, and the thickness T of the filament 10B produced by cutting is 0.22 mm.

The thermal drafting (thermal stretching) D procedure, the thermal shaping F procedure, and the cooling C procedure of FIG. 8 are also used in the filament 10B to obtain the thinned filament 20B. As shown in FIGS. 9 and 13, the filament 20 is stretched by 150% or 300% (for example, stretching the 10 cm long filament to 25 cm or 40 cm), a degree of thinning of the filament 20 is between 50% and 150%. Please refer to the description of the first preferred embodiment for the details of the manufacturing process in FIG. 8. The cross-section of the filament 20B is elliptical, has the two axial directions X and Z with different lengths, and a pair of opposite sides, such as the left and right sides G shown in the figures, being arcuate. The photomicrographs of the filament 20B are shown in FIGS. 18 and 19. The cross-section of the base layer 22B is also elliptical. After stretching and thinning, a diameter of the filament 20B becomes smaller, and the denier is reduced by at least half, and the base layer 22B is also thinned. After the manufacturing process of FIG. 8, the internal structure of the base layer 22B of the filament 20B is also the same as that shown in FIG. 10, has a great number of the polymer chain crystallization regions 23 and the polymer chains 24 arranged in the forward direction, leaving only a small amount of the irregularly arranged polymer chains 26. The physical properties of the filament 20B are improved, including increasing a strength and an initial modulus of the filament 20B, reducing a breaking elongation, and improving a tolerance to the environment to be capable of withstanding irradiation of ultraviolet ray, and withstanding the influence of water vapor and air without degrading/decomposing, and has a long service life, and increasing a tensile force that the filament 20B can withstand, increasing its strength, and its strength can be increased by 1.3 to 2 times.

The two coating layers 16 and the two adhesive layers 14 of the thinned filament 20B are arcuate, and the two coating layers 16 are adhered on the base layer 22B along the stretched surfaces 221 via the two adhesive layers 14. Since the two adhesive layers 14 are made of a thermoplastic elastomer material, the two adhesive layers 14 are capable of stretching with the base layer 22B without fracturing, ensuring the functional coating layers 16, especially the glass microbeads 161 can be maintained to adhere to the base layer 22B without falling off or separating.

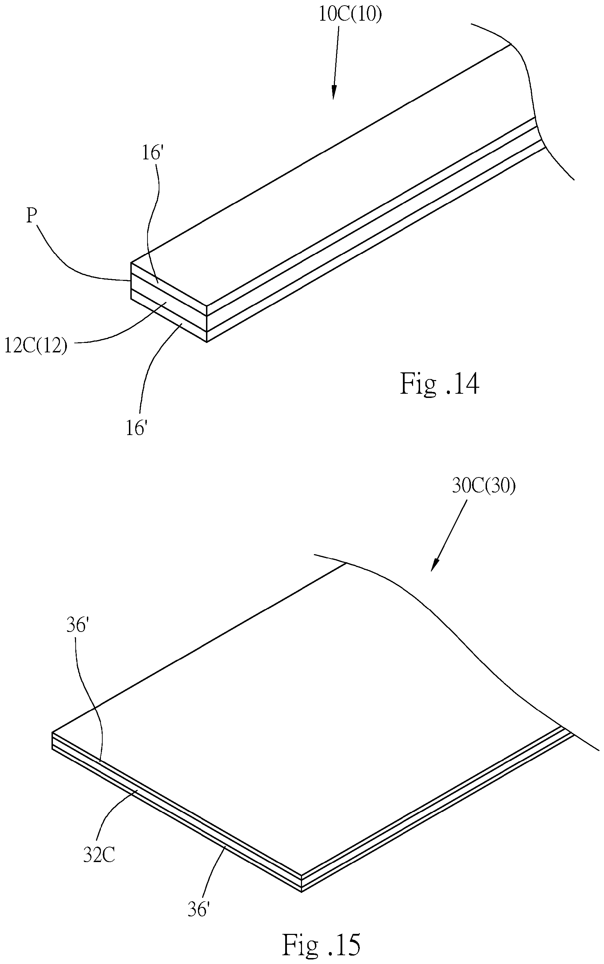

Please refer to FIG. 14 for the unthinned filament 10C (10) produced by cutting according to a third preferred embodiment of the invention. The filament 10C has a base layer 12C, and one or two functional coating layers 16' coated or plated on a disposing surface of a top side or/and a bottom side of the base layer 12C, and two sides of the filament 10C (10) are the cut planes P. The microstructure of the filament 10C (10) can be referred to FIGS. 17 to 19. The base layer 12C can be the elastic base layer 12A described in the first preferred embodiment, or the base layer 12B with low elasticity and low stretchability described in the second preferred embodiment. Each of the coating layers 16' has a substrate made of a polymer resin material, such as polyurethane resin. The substrate is mixed with luminescent particles, or aluminum powder, or electric conductive slurry, and the coating layer 16' is mixed with an adhesive material (not shown in the figures) of a thermoplastic elastomer. The adhesive material is the material of the adhesive layer 14 of the previous embodiment. The coating layer 16' is disposed on at least one disposing surface of the base layer 12C by coating or plating, and adhered to the disposing surface of the base layer 12C with the adhesive material. With the luminescent particles or aluminum powder or conductive slurry, the coating layer 16' is made into a luminescent coating layer or a coating layer with a metallic color or an electric conductive coating layer.

The filament 10C is produced by cutting the membrane material 30C of FIG. 15 with the manufacturing method of FIG. 6. The membrane material 30C has a membranous base layer 32C, and one or two membranous coating layers 36' disposed on a top surface or/and a bottom surface of the membranous base layer 32C. The membranous base layer 32C can be the elastic base layer 32A described in the first preferred embodiment, or the base layer 32B with low elasticity and low stretchability described in the second preferred embodiment. Composition and components of each of the membranous coating layers 36' are the same as those of the functional coating layer 16', that is, the substrate of the membranous coating layer 36' is mixed with an adhesive material of a thermoplastic elastomer, and adhered to the membranous base layer 32C via the adhesive material. The membranous coating layer 36' can be a luminescent coating layer, a coating layer with a metallic color, or a coating layer with electric conductivity.

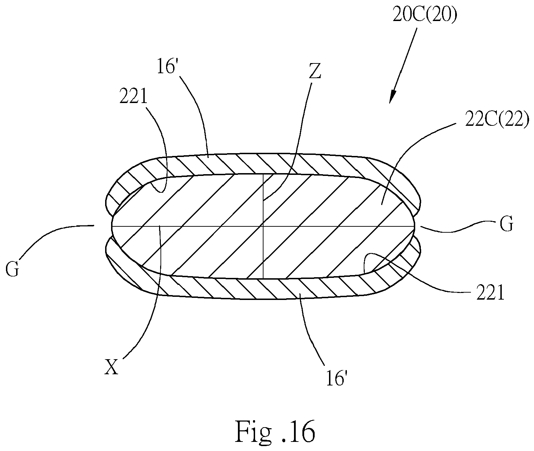

The thermal drafting (thermal stretching) D procedure, the thermal shaping F procedure, and the cooling C procedure of FIG. 8 are used in the filament 10C to make the stretched and thinned filament 20C(20), as shown in FIG. 16, for the physical properties of the filament 20C, please refer to the filament 20A or the filament 20B. The cross-sections of the base layer 22C and the filament 20C are elliptical, and the filament 20C has the two axial directions X and Z with different lengths, and the two sides G are arcuate. Please refer to FIG. 18 and FIG. 19 for the microstructure of the filament 20C(20). After stretching and thinning, a diameter of the filament 20C becomes smaller, and the denier is greatly reduced, the internal structure of the base layer 22C is also the same as that shown in FIG. 10, has a great number of the polymer chain crystallization regions 23 and the polymer chains 24 arranged in the forward direction, leaving only a small amount of the irregularly arranged polymer chains 26, so that the physical properties of the filament 20C are improved without being affected by unfavorable factors, so the filament 20C does not degrade/decompose and has a long service life.

The two coating layers 16' are along the radian/curvature of the stretched surfaces 221 and adhered on the stretched surfaces 221 of the base layer 22C via the adhesive material of a thermoplastic elastomer. The coating layers 16' have radian/curvature. During the stretching process, the adhesive material is capable of stretching with the base layer 22C without fracturing, so that the functional coating layers 16' can be maintained to adhere to the base layer 22C without falling off or separating.

The present invention can be made into fine/micro filaments, such as a filament with an outer diameter of 0.09~0.6 mm, especially a filament of 0.09~0.3 mm. The filament 20 (20A, 20B, 20C) made by the invention has high strength, low breaking elongation, high initial modulus, high elastic recovery rate, and various excellent physical properties, and can be directly used as a main thread (upper thread) of textiles, and can be directly used as a sewing thread, or an embroidery thread, or a jacquard thread. The filament 20 (20A, 20B, 20C) can be used directly without the need to wrap the filament 20 with yarns. The filament 20 is directly exposed, so its luminescent or light-reflective coating layer will not be hindered, maintaining its luminescent or light-reflective function intact.

The functional coating layer (16, 16') of the filament 20 produced by the invention has a larger specific surface area, and an area ratio of the coating layer (16, 16') to the surface of the filament 20 is increased, thereby enhancing the function of the coating layer (16, 16').

The light-reflective layer of the glass microbeads 161 can only be formed on the surfaces of the membrane material 12 and the filament 10 by coating. Therefore, in order to make a filament with the glass microbeads 161 disposed on a surface of the filament, the coating layer of the glass microbeads 161 can only be coated on the membrane material 30 (30A, 30B) by coating, and then the filament can be produced by cutting. The manufacturing method of thermal drafting of the invention is particularly suitable for using in a filament whose functional coating layer can only be formed on the surfaces of the membrane material by coating before the filament is produced by cutting.

The filament of the invention is cut from the thermoplastic membrane material and thinned by thermal stretching, has a smaller diameter, and can be made into the filament thinner than that produced by conventional cutting method alone. The filament of the invention has a better tactile impression and a wider application range.

It is to be understood that the above description is only the embodiments of the invention and is not used to limit the present invention, and changes in accordance with the concepts of the present invention may be made without departing from the spirit of the present invention. For example, the equivalent effects produced by various transformations, variations, modifications and applications made to the configurations or arrangements shall still fall within the scope covered by the appended claims of the present invention.

## Claims

1. A filament made from cutting a membrane material and being thinned, the filament being a fine filament formed by cutting a membrane material, and thermally stretched and shaped; a cross-section of the filament being elliptical, a cross-sectional structure thereof having:
a base layer with an elliptical cross-section, a pair of surfaces of opposite sides of the base layer forming two stretched surfaces with a radian; and
at least one coating layer provided on at least one of the stretched surfaces of the base layer by coating or plating, and adhered to at least one of the stretched surfaces of the base layer by an adhesive material with a thermoplastic elastomer;
and the coating layer being adhered on the base layer along the stretched surface.

2. The filament as claimed in claim 1, wherein the adhesive material is mixed in the coating layer.

3. The filament as claimed in claim 1, further comprising at least one adhesive layer made of a thermoplastic elastomer material with stretchability, the at least one adhesive layer being provided on at least one of the stretched surfaces of the base layer; and the at least one coating layer being adhered to at least one of the stretched surfaces of the base layer via the at least one adhesive layer.

4. The filament as claimed in any of claims 1 to 3, wherein an internal structure of the base layer has a great number of polymer chain crystallization regions and forward polymer chains.

5. The filament as claimed in any of claims 1 to 3, wherein the base layer of the filament is made of a thermoplastic elastomer material, so that the filament forms an elastic filament.

6. The filament as claimed in claim 5, wherein when the filament is stretched by 10%, an elastic recovery rate thereof is at least 96%.

7. The filament as claimed in claim 5, wherein a breaking elongation of the filament is within 100%.

8. The filament as claimed in claim 1 or 2, wherein the coating layer is a functional coating layer, which is a luminescent layer with luminescent particles, or a coating layer with a metallic color, or a coating layer with electric conductivity.

9. The filament as claimed in claim 3, wherein the coating layer is a functional coating layer, which is a light-reflective layer with tiny light-reflective elements, or a luminescent layer with luminescent particles, or a coating layer with a metallic color, or a coating layer with electric conductivity.

10. The filament as claimed in any of claims 1 to 3, wherein the base layer of the filament is made of a thermoplastic plastic material with low stretch elasticity, so that the filament forms a filament with low elasticity and low stretchability.

11. The filament as claimed in claim 1 or 2, wherein the filament has two coating layers respectively adhered to the two stretched surfaces of the base layer.

12. The filament as claimed in claim 3, wherein the filament has two adhesive layers and two coating layers, and the two coating layers are respectively adhered to the two stretched surfaces of the base layer via the two adhesive layers.

13. The filament as claimed in claim 5, wherein the base layer is an elastic material of thermoplastic polyolefin (TPO), thermoplastic polyurethane (TPU), thermoplastic elastomer (TPE), thermoplastic polyolefin elastomer (TPEO), thermoplastic polyether-based urethane elastomer (TPEU), or thermoplastic polyurethane-based (TPU-based) elastomer.

14. The filament as claimed in claim 10, wherein the base layer is nylon, polyester material, or polyethylene terephthalate (PET).

15. A method for manufacturing filaments made by cutting a membrane material and thinning comprising following steps of:
A. preparing a membrane material, the membrane material having a membranous base layer and at least one membranous coating layer, the membranous base layer being made of a thermoplastic plastic material; the at least one membranous coating layer being at least adhered to one of a top surface or a bottom surface of the membranous base layer by an adhesive material with a thermoplastic elastomer;
B. cutting the membrane material into several fine filaments, each of the filaments having a rectangular cross-section, and two sides of each of the filaments being cut planes;
C. a thermal stretching procedure, applying thermal stretching to the filament, stretching the filament with at least one stretching, so that the filament being stretched and thinned by heating;
D. a thermal shaping procedure, applying thermal shaping to the thermally stretched filament to stabilize the filament; and
E. cooling the filament to make into a finished product of the filament, a cross-section of the stretched and thinned filament being elliptical.

16. The manufacturing method as claimed in claim 15, wherein the adhesive material is mixed in the membranous coating layer.

17. The manufacturing method as claimed in claim 15, wherein the membrane material further comprises at least one adhesive layer made of a thermoplastic elastomer material; and the at least one membranous coating layer is at least adhered to one of the top surface or the bottom surface of the membranous base layer via the at least one adhesive layer.

18. The manufacturing method as claimed in claim 15, 16 or 17, wherein in the thermal stretching procedure of step C, at least two stretches are applied to the filament, including a first stretching and a second stretching, and a stretch ratio of the second stretching is less than a stretch ratio of the first stretching.

19. The manufacturing method as claimed in claim 15, 16 or 17, wherein in the thermal stretching procedure of step C, the filament is heated with a gaseous fluid or a liquid fluid.

20. The manufacturing method as claimed in claim 15, 16 or 17, wherein the filament is heated with a liquid fluid in the thermal stretching procedure, and after the filament leaves the liquid fluid for heating, a blowing device or an exhaust device is used to remove the fluid on the filament.

21. The manufacturing method as claimed in claim 15, 16 or 17, wherein the filament is thinned after being stretched, a degree of thinning is between 50% and 150%, and polymer chain crystals and forward polymer chains are inside the filament.

22. The manufacturing method as claimed in claim 15, 16 or 17, wherein a temperature of the thermal stretching of step C is 60°C~120°C; and a temperature of the thermal shaping is higher than the temperature of the thermal stretching but lower than a melting point of the elastic filament.

23. The manufacturing method as claimed in claim 15, 16 or 17, wherein the membranous base layer is made of a thermoplastic elastomer material, so that the membrane material has elasticity.

24. The manufacturing method as claimed in claim 15, 16 or 17, wherein the membranous base layer is made of a thermoplastic plastic material with low stretch elasticity, so that the membrane material is a membrane material with low elasticity and low stretchability.

25. The manufacturing method as claimed in claim 15, 16, 17, 23 or 24, wherein the membranous coating layer is a functional coating layer, which is a luminescent layer with luminescent particles, or a coating layer with a metallic color, or a coating layer with electric conductivity.

26. The manufacturing method as claimed in claim 17, 23 or 24, wherein the membranous coating layer is a functional coating layer, which is a light-reflective layer with tiny light-reflective elements, or a luminescent layer with luminescent particles, or a coating layer with a metallic color, or a coating layer with electric conductivity.
